# EUROPEAN PATENT SPECIFICATION

(11) **EP 2 030 806 B1**
(45) Date of publication and mention of the grant of the patent: **28.08.2013**
(21) Application number: 08005647.6
(22) Date of filing: 26.03.2008
(51) Int. Cl.: B60B 21/06, B62L 1/12, F16D 65/04, F16D 65/80, F16D 69/02

(54) **Brake pad for a bicycle**
Bremsklotz für ein Fahrrad
Plaquette de frein pour bicyclette

(30) Priority: 31.08.2007 IT MI20071711
(43) Date of publication of application: 04.03.2009
(73) Proprietor: CAMPAGNOLO S.r.l., 36100 Vicenza (VI) (IT)
(72) Inventor: Fabris, Paolo, 36040 Brendola (Vicenza) (IT)
(74) Representative: Checcacci, Giorgio

(56) References cited:
- EP-A- 1 845 277
- GB-A- 1 405 676
- GB-A- 1 501 331
- GB-A- 2 138 898
- US-A- 3 921 764
- US-A- 4 441 592
- DATABASE WPI Week 199205 Thomson Scientific, London, GB; AN 1992-036408 XP002500989 -& JP 03 282028 A (TOSHIBA TUNGALLOY KK) 12 December 1991 (1991-12-12)

## Description

The present invention concerns a brake pad for a bicycle.

In the field of racing bicycles there is now widespread use of components made from composite materials, like for example materials made up of carbon fibres incorporated in a matrix of polymeric material. Amongst the components made with these materials rims for bicycle wheels are highly esteemed because of the excellent combination that it is possible to obtain between strength, elasticity and lightness.

However, it has been found by the inventors of the present invention that rims made like this can hit crisis point following intense braking. The brake pads, indeed, rub on the rim and thus generate heat; it has been found that it is not unusual to reach temperatures of 200°C. The heat alters the mechanical characteristics of the polymeric matrix in which the carbon fibres are inserted, in particular it decreases its rigidity and mechanical resistance even by three orders of magnitude (i.e. by a factor of 1000) and weakens the link between the matrix and the other components. A delamination of the rim can thus occur. In extreme cases the rim can even break or braking may not occur with serious consequences for the safety of the cyclist.

In the case of rims made from metallic material the problem is not so extreme, but the heating of the rim can lead to a decreased braking efficiency.

The problem forming the basis of the present invention is to overcome the aforementioned problems, ensuring both good reliability and strength of the wheel in all braking conditions, and constant braking performance.

Consequently, the present invention concerns, in a first aspect thereof, a brake pad according to claim 1, in a second aspect thereof, a wheel-brake assembly according to claim 11 and in a third aspect thereof, a mixture for the preparation of a brake pad according to claim 16.

More specifically, a brake pad according to the invention comprises a braking surface intended to be pressed during braking against a side of a rim of a wheel of the bicycle, characterised in that it comprises thermal transmission means suitable for transferring heat away from the braking surface.

It is clear that any material is able to transmit heat by conduction and that in any system heat is also transmitted by convection and by radiation; it is therefore clear that in any wheel-brake assembly the heat generated at the braking surface of the pads does not stay in this area but transfers spontaneously from it towards other colder areas, over different times and in different ways according to the different cases. In the context of the present invention, by the expression "thermal transmission means" an assembly of elements or materials is meant, that is provided in the brake pad specifically for its ability to transfer heat in a clearly better way than all of the other elements or materials present in the pad.

Thanks to the presence of such thermal transmission means, the heat that is generated at the braking surface during braking is taken away from this area and transferred into other areas of the pad. The amount of heat that transfers to the rim is thus reduced and the risks due to overheating of the rim are thus limited.

In particular, it has been observed that, with conventional pads, the heat that is generated on the braking surface stays on such a surface and is dispersed by contact with the surrounding air after braking has ended. Advantageously, thanks to the invention, the thermal transmission means also take heat away from the braking surface during braking, for which reason the risk of excessively heating the rim does not exist even during prolonged braking.

Preferably, the pad comprises a heat exchange surface towards the outside of the pad, distinct from the braking surface, in which the thermal transmission means transmit heat from the braking surface to the heat exchange surface. In this way, a preferential pathway is established through which the heat produced by braking is transferred to outside the pad; there is therefore less overheating of the pad and its ability to transfer heat away from the braking surface is greater.

Preferably, the heat exchange surface is suitable for going into contact with a pad-carrying support or else with air. In the first case, the heat exchange surface shall preferably be flat and regular, so as to promote the transmission of heat by contact, and the pad-carrying support shall be made from a material with high thermal conductivity; in the second case, the heat exchange surface shall be as wide as possible, preferably finned, so as to maximise the extension of the contact with air. Advantageously, the pad is thus also cooled during braking without the need to alter its conventional size, since surfaces that are already present on the pad can be exploited as heat exchange surfaces.

According to an embodiment different from the invention, the pad comprises a matrix of high-friction material and the thermal transmission means comprise filaments of material having higher thermal conductivity than the material of the matrix, incorporated in the matrix. Preferably, said filaments are close to the braking surface but are not actually on it, so as not to interfere with the conditions of contact between pad and side of the rim and consequently with the braking performance. Preferably, said filaments are made from material having thermal conductivity of over 50 W/m°K or rather over 150 W/m°K; preferably, such a material is metallic, preferably zinc, iron, steel, aluminium, copper or silver.

According to the invention, the pad comprises a matrix of high-friction material and the thermal transmission means comprise granules of material having higher thermal conductivity than the material of the matrix, incorporated in the matrix. Preferably, said granules are distributed throughout the matrix, including the braking surface, since the granulated structure does not interfere unacceptably with the conditions of contact between the brake pad and the side of the rim; thanks to the presence of the granules already on the braking surface, the efficiency of heat dispersal is maximised; moreover, the construction of such a pad is particularly simple and cost-effective, with it being sufficient to add the granules to the mixture with which the matrix is formed. Preferably, said granules are of a material having thermal conductivity of over 50 W/m°K or rather over 150 W/m°K.

Said granules have an average size of between 10 µm and 100 µm. With this size a satisfactory dispersal in the rubber is obtained, the rim is prevented from being abraded and at the same time the aggregation between the rubber particles is not hindered.

The matrix is made from rubber and the granules are made from graphite, preferably expanded natural graphite. By using such granules, it has indeed been found that there is a better aggregation between the rubber molecules compared to other types of granules and lesser abrasion of the rim. The granules have an average size of between 10 µm and 100 µm; indeed, compared to smaller-sized granules, these granules are less volatile and facilitate the management of the process for making the pad, whilst they are distributed more homogeneously in the mixture compared to larger-sized granules.

Alternatively, according to an embodiment that is different from the invention, the matrix is made from rubber and the granules are made from molybdenum disulphide. In this case, preferably, the granules have an average size of less than 20 µm, so as to amalgamate in the best way with the rubber matrix.

Again alternatively, according to an embodiment that is different from the invention, the granules are made from metallic material, preferably zinc, iron, steel, aluminium, copper or silver. In this case, the granules have an average size of less than 1 µm, to avoid the abrasion of the rim.

Preferably, the pad is made from a mixture comprising, by weight, 30-60% rubber and 4-50% granules; a larger amount of granules can jeopardise the braking performance, whereas a smaller amount is not sufficient to ensure the desired heat dispersal.

More preferably, the mixture comprises, by weight, 30-40% rubber, 40-60% cork and 4-20% granules and, even more preferably, the sum of the percentage weight of cork and of granules is less than or equal to 65%. The presence of cork in the mixture has been found particularly advantageous to decrease the wear both of the rim, in particular of a fibre rim, and of the pad itself, without decreasing the braking power. This mixture has also proven particularly suitable for decreasing the noise when braking and for promoting good braking performance both in the wet and in the dry. With the indicated amounts, no difficulties of aggregation with the rubber were encountered.

Preferably, the cork is in granules with an average size of 0.3-1 mm, preferably 0.5-0.7 mm. In this case, granules of material with high thermal conductivity of a smaller size than the granules of cork are preferred, so as to be able to insert in the gaps between the granules of cork and promote aggregation.

Preferably, said granules are of expanded natural graphite, in an amount equal to 4-15% by weight.

In its second aspect, the present invention more specifically concerns a wheel-brake assembly for a bicycle, comprising:
- a wheel, including a rim having two opposite sides; and
- a brake, including two brake pads, according to the first aspect of the invention, intended to be actuated during braking in the sense of pressing respective braking surfaces of the pads against the sides of the rim.

Preferably, the rim is made from composite material, since it is with this type of rim that the advantages of the invention are most appreciable.

Preferably, each pad is mounted on the respective brake through a pad-carrying support; more preferably, each pad comprises a heat exchange surface towards the outside of the pad, in contact with the respective pad-carrying support, and the thermal transmission means transmit heat from the braking surface to the heat exchange surface and from here to the pad-carrying support.

Preferably, each pad-carrying support is provided with finning to promote heat dispersal.

In its third aspect, the present invention more specifically concerns a mixture for the preparation of a brake pad for a brake of a bicycle, comprising rubber, cross-linking agents and graphite granules having greater thermal conductivity than rubber, characterised in that the granules have an average size of between 10 µm and 100 µm.

Further characteristics and advantages of the invention shall become clearer from the following description of some preferred embodiments thereof, made with reference to the attached drawings. In such drawings:
- figure 1 shows a bicycle comprising a front wheel-brake assembly and a rear wheel-brake assembly;
- figure 2 shows a brake of the bicycle of figure 1 in a perspective view;
- figure 3 shows a wheel-brake assembly of the bicycle of figure 1, represented in a rest configuration;
- figures 4 and 5 schematically show two embodiments of a pad for bicycle brakes the former being according to the present invention.

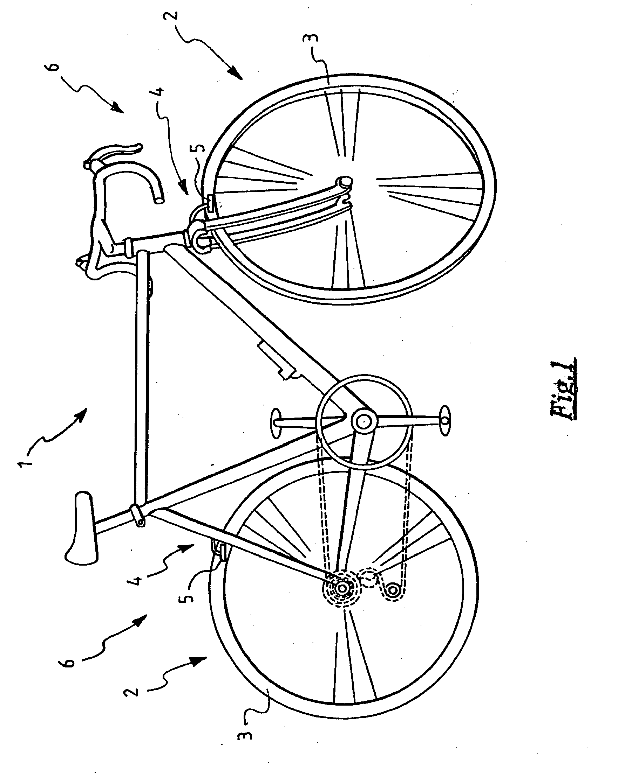

In figure 1 a bicycle 1 is represented, comprising a pair of wheels 2, each of which comprises a rim 3. A brake 4 is provided for each wheel 2 and comprises at least one brake pad, more preferably a pair of brake pads 5, intended to act on the sides 8 of the rim 3 by friction as a result of a command imparted by a brake control system (*per sé* conventional and not illustrated), thus carrying out the braking of the wheel.

The rim 3 is made from composite material, for example of the type that comprises structural fibres incorporated in a polymeric material. Typically, the structural fibres are selected from the group consisting of carbon fibres, glass fibres, aramid fibres, ceramic fibres, boron fibres and combinations thereof. Carbon fibres are particularly preferred.

The arrangement of said structural fibres in the polymeric material can be a random arrangement of pieces or sheets of structural fibres, an ordered substantially unidirectional arrangement of fibres, an ordered substantially bidirectional arrangement of fibres or a combination of the above.

Preferably, the polymeric material is thermosetting and preferably comprises an epoxy resin. However, this does not rule out the possibility of using a thermoplastic material.

The rim 3 in general is made by overlapping a series of sheets of composite material that stick together thanks to the common resin.

The rim 3 and the pad 5 are the essential elements of a wheel-brake assembly 6 of the bicycle 1.

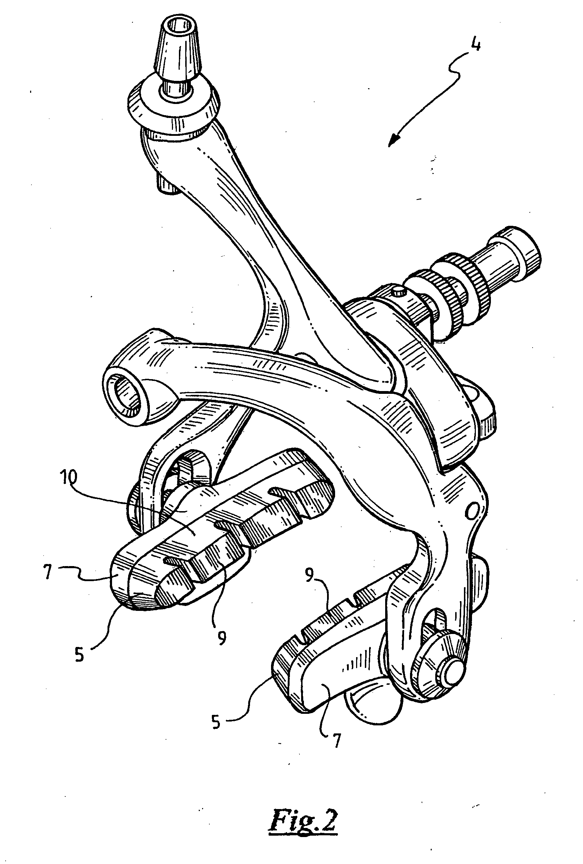

Figure 2 shows the brake 4 in greater detail, which comprises a pad-carrying support 7 by means of which each pad 5 is mounted in the brake 4.

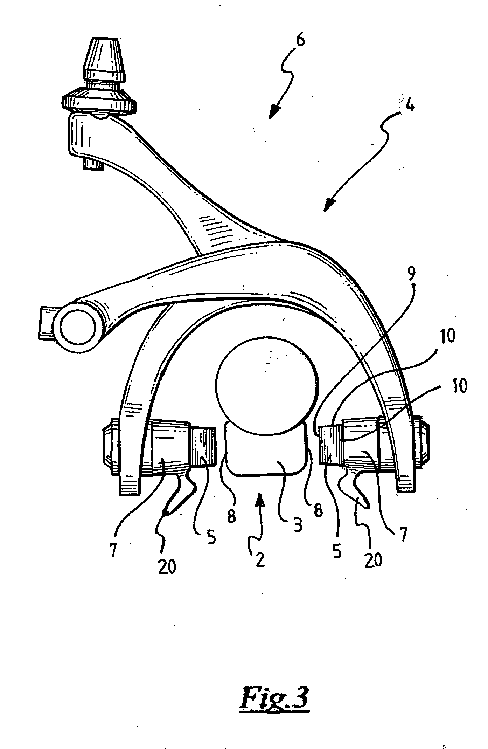

Figure 3 schematically illustrates the mutual assembly position of the brake 4 and of the wheel 2 on the bicycle 1 in rest condition, i.e. when the pad 5 does not act upon the sides 8 of the rim 3.

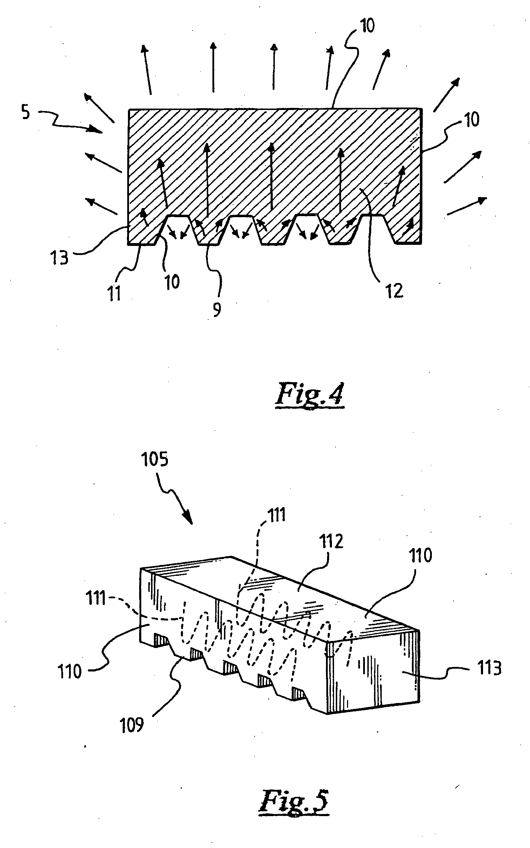

Figure 4 shows the brake pad 5, made in accordance with the present invention in greater detail. The pad 5 comprises a braking surface 9, intended to come into contact with the side 8 of the rim 3 during braking, and a plurality of other surfaces 10 intended to not come into contact with the side 8. The braking surface 9 and the other surfaces 10 define the body 12 of the pad 5, in particular the surfaces 10 comprise all of the outer surfaces of the pad 5 other than the braking surface 9, including indentation surfaces that project from the braking surface towards the inside of the pad 5 and the surfaces intended to possibly come into contact with the pad-carrying support 7.

The body 12 of the pad 5 comprises a matrix 13 of high-friction material in which thermal transmission means are incorporated that are suitable for transferring heat from the braking surface 9 to the other surfaces 10.

More specifically, the body 12 is made with a mixture comprising rubber, cross-linking agents and a powder of material with a higher heat conduction coefficient than rubber, which forms said thermal transmission means.

The powder consists of granules 11, preferably distributed homogeneously throughout the body 12 of the pad 5 and preferably, but not necessarily, in an amount such as to allow contact between at least some adjacent granules 11 so as to constitute random heat transmission channels from the braking surface 9 inside the pad 5 towards the other surfaces 10. It should be noted that figure 4 is just schematic and is not significant with regard to the distribution of the granules 11.

The surfaces 10 are heat exchange surfaces towards the outside of the pad 5. The heat exchange surfaces 10 can be in contact with the pad-carrying support 7 or else they can be in direct contact with the air. Advantageously, the random distribution of the granules 11 ensures that each surface of the pad 5 other than the braking surface 9 is a heat exchange surface 10, either with air or with another body such as the pad-carrying support, and therefore a cooling surface. The efficiency of the heat exchange compared to a conventional brake pad is enormously increased; indeed, the total heat exchange surface of the pad 5 is the sum of all of the surfaces 10 and is much greater than the braking surface 9 where the heat is generated.

The pad-carrier 7 can in turn be equipped with cooling fins 20 (fig 3) to further increase the heat exchange surface.

In figure 4 the arrows schematically indicate the heat transmission flows inside and outside the pad. In order to maximise the heat flows, it is advantageous to use granules 11 of a material with a heat transmission coefficient of over 50 W/m°K, and even more preferably over 150 W/m°K.

As term of comparison it is considered that the matrix used for the present pad preferably has a heat transmission coefficient of less than 0,5 W/m°K, and therefore it should be considered an insulating material.

Preferably, the granules 11 have an average size of less than 500 µm, even more preferably under 200 µm. According to the invention in which granules 11 are used that are made from graphite, and preferably from expanded natural graphite, also particularly suitable due to its low specific weight that does not increase the weight of the pad 5, the size of the granules 11 is selected as being between 10 µm and 100 µm.

According to a possible variant, different from the invention, the granules 11 can be made from molybdenum disulphide and have an average size of less than 20 µm.

According to a further variant, different from the invention, the granules 11 can be made from metallic material, for example zinc, iron or steel, aluminium, silver or copper; indeed, these materials have a particularly high heat transmission coefficient. In these cases then size of the granules 11 is under 1 µm.

In general, the mixture from which the brake pad 5 is made must respect the following formulation, given in percentage weight of the components: 30%-60% rubber and 4%-50% granules 11.

A first preferred mixture that respects the general formulation is given by: 30%-40% rubber, 40%-60% cork and 4%-20% granules 11. In this case, it should be noted that the allowable percentage of granules 11 is reduced, to avoid problems of aggregation due to the simultaneous presence of cork. In particular, the cork can be introduced in granules of an average size of between 0.3 and 1 mm, more preferably between 0.5 and 0.7 mm; granules 11 of material with high thermal conductivity of a smaller size than cork are preferred, because they can insert into the gaps between the granules of cork.

A second preferred mixture that respects the general formulation comprises 30%-40% rubber, 40%-60% cork and 4%-15% granules 11 of expanded natural graphite. Since both graphite and cork are elements foreign to rubber, they worsen its aggregation, even if expanded natural graphite amongst all of the mentioned types of granules 11 is the one that worsens it the least. In order to limit this effect it is preferable to have percentages of graphite in the lower part of the range, for example from 4% to 10%, when there are high percentages of cork, for example from 45% to 55%.

In any case, preferably, the sum of the amount of cork and of granules 11 is 65% less by percentage weight.

All of the mixtures also contain cross-linking agents of the rubber that is preferably made up of a polymer selected from acrylonitrile butadiene, hydrogenated acrylonitrile butadiene, styrene butadiene, ethylene-propylene, chloroprene, or combinations thereof.

Figure 5 illustrates a pad 105 according to an alternative embodiment outside of the invention, in which the heat is transferred from the braking surface 109 inside the pad 105 towards the heat exchange surfaces 110 through thermoconductor filaments 111, incorporated in the matrix 113 of the body 112 of the pad 105. Copper filaments are particularly preferred, arranged immediately below the braking surface 109, for example at a distance of about 3 mm from it; with this distance, they maintain a good ability to collect heat from the braking surface 109 whilst still avoiding them being able to reach the braking surface 109 and abrade the side 8 of the rim 3 during braking, as the pad 105 wears down.

The pads indicated above can of course also be used in association with rims made from metallic material, like aluminium alloys, even if the cooling effect is less evident.

## Claims

1. Brake pad (5, 105) for a brake (4) of a bicycle (1), comprising a braking surface (9, 109) intended to be pressed during braking against a side (8) of a rim (3) of a wheel (2) of the bicycle (1), a high-friction rubber matrix (13), thermal transmission means (11, 111) suitable for transferring heat away from the braking surface (9, 109), said thermal transmission means comprising granules (11) made from graphite having higher thermal conductivity than the rubber matrix (13), Incorporated in the matrix (13), **characterised in that** the granules (11) have an average size of between 10 µm and 100 µm.

2. Pad according to claim 1, comprising a heat exchange surface (10, 110) towards the outside of the pad (5, 105), distinct from the braking surface (9, 109), wherein the thermal transmission means (11,111) transmit heat from the braking surface (9, 109) to the heat exchange surface (10,110).

3. Pad according to claim 2, wherein the heat exchange surface (10, 110) is suitable for coming into contact with a pad-carrying support (7) or with air.

4. Pad according to claim 1, wherein said granules (11) are distributed throughout the matrix (13), including the braking surface (9).

5. Pad according to claim 1, wherein the graphite granules (11) are made from expanded natural graphite.

6. Pad according to claim 1, made from a mixture comprising, by weight, 30-60% rubber and 4-50% granules (11).

7. Pad according to claim 6, wherein the mixture comprises, by weight, 30-40% rubber, 40-60% cork and 4-20% granules (11).

8. Pad according to claim 7, wherein the sum of the percentage weight of cork and of granules (11) is less than or equal to 65%.

9. Pad according to claim 7, wherein the cork is in granules of an average size of 0.3-1 mm, preferably 0,5-0.7 mm.

10. Pad according to claim 7, wherein said granules (11) are made from expanded natural graphite, in an amount equal to 4-15% by weight.

11. Wheel-brake assembly (6) for a bicycle (1), comprising:
- a wheel (2), including a rim (3) having two opposite sides (8); and
- a brake (4), including two brake pads (5, 105) according to any of previous claims, intended to be actuated during braking in the sense of pressing respective braking surfaces (9, 109) of the pads (5, 105) against the sides (8) of the rim (3).

12. Assembly according to claim 11, wherein the rim (3) is made from composite material,

13. Assembly according to claim 11, wherein each pad (5, 105) is mounted on the respective brake (4) through a pad-carrying support (7).

14. Assembly according to claim 13, wherein each pad (5, 105) comprises a heat exchange surface towards the outside of the pad (5, 105), in contact with the respective pad-carrying support (7), wherein the thermal transmission means (11, 111) transmit heat from the braking surface (9, 109) to the heat exchange surface (10, 110) and from here to the pad-carrying support (7).

15. Assembly according to claim 14, wherein each pad-carrying support (7) is provided with finning (20) to promote heat dispersal.

16. Mixture for the preparation of a brake pad (5, 105) for a brake (4) of a bicycle (1), comprising rubber, cross-linking agents and graphite granules (11) having greater thermal conductivity than rubber, **characterised in that** the granules (11) have an average size of between 10 µm and 100 µm.

17. Mixture according to claim 16, wherein the graphite granules (11) are of expanded natural graphite.

18. Mixture according to claim 17, comprising, by weight, 30-60% rubber and 4-50% granules (11).

19. Mixture according to claim 18, comprising, by weight, 30-40% rubber, 40-60% cork and 4-20% granules (11).

20. Mixture according to claim 19, wherein the sum of the percentage weight of cork and of granules (11) is less than or equal to 65%.

21. Mixture according to claim 19, wherein the cork is in granules of an average size of 0.3-1 mm, preferably 0.5-0.7 mm.

22. Mixture according to claim 19, wherein said granules (11) are in an amount equal to 4-15% by weight.

## Patentansprüche

1. Bremsbelag (5, 105) für eine Bremse (4) eines Fahrrades (1), umfassend eine Bremsfläche (9, 109), die dazu bestimmt ist, während des Bremsens gegen eine Seite (8) einer Felge (3) eines Rades (2) des Fahrrades (1) gedrückt zu werden, eine Gummimatrix (13) hoher Reibung sowie Wärmeleiteinrichtungen (11, 111), die sich dazu eignen, Wärme von der Bremsfläche (9, 109) wegzuleiten, wobei die Wärmeleiteinrichtungen Körner (11) enthalten, die aus Graphit bestehen, das eine höhere Wärmeleitfähigkeit hat als die Gummimatrix (13), und in der Matrix (13) enthalten sind, **dadurch gekennzeichnet, dass** die Körner (11) eine durchschnittliche Größe zwischen 10 µm und 100 µm haben.

2. Belag nach Anspruch 1, umfassend eine Wärmetauschfläche (10, 110), die der Außenseite des Belages (5, 105) zugewandt und von der Bremsfläche (9, 109) getrennt ist, wobei die Wärmeleiteinrichtungen (11, 111) Wärme von der Bremsfläche (9, 109) zu der Wärmetauschfläche (10, 110) leiten.

3. Belag nach Anspruch 2, bei dem die Wärmetauschfläche (10, 110) dazu geeignet ist, mit einer Belagshalteaufnahme (7) oder mit Luft in Berührung zu kommen.

4. Belag nach Anspruch 1, bei dem die Körner (11) in der Matrix (13) verteilt sind, die die Bremsfläche (9) umfasst.

5. Belag nach Anspruch 1, bei dem die Graphitkörner (11) aus expandiertem Naturgraphit bestehen.

6. Belag nach Anspruch 1, der aus einem Gemisch besteht, das 30-60 Gew.-% Gummi und 4-50 Gew.-% Körner (11) enthält.

7. Belag nach Anspruch 6, bei dem das Gemisch 30-40 Gew.-% Gummi, 40-60 Gew.-% Kork und 4-20 Gew.-% Körner (11) enthält.

8. Belag nach Anspruch 7, bei dem die Summe der Gewichtsprozentsätze von Kork und der Körner (11) kleiner oder gleich 65% ist.

9. Belag nach Anspruch 7, bei dem der Kork in Körnern mit einer durchschnittlichen Größe von 0,3 bis 1 mm, vorzugsweise 0,5 bis 0,7 mm vorliegt.

10. Belag nach Anspruch 7, bei dem die Körner (11) aus expandiertem Naturgraphit in einem Umfang von 4-15 Gew.-% bestehen.

11. Radbremsenanordnung (6) für ein Fahrrad (1), umfassend:
- ein Rad (2), das eine Felge (3) mit zwei gegenüberliegenden Seiten (8) hat; und
- eine Bremse (4), die zwei Bremsbeläge (5, 105) nach einem der vorhergehenden Ansprüche umfasst, die dazu bestimmt sind, während des Bremsens in dem Sinne betätigt zu werden, dass entsprechende Bremsflächen (9, 109) der Beläge (5, 105) gegen die Seiten (8) der Felge (3) gedrückt werden.

12. Anordnung nach Anspruch 11, bei der die Felge (3) aus einem Verbundmaterial besteht.

13. Anordnung nach Anspruch 11, bei der jeder Belag (5, 105) an der entsprechenden Bremse (4) durch eine Belagshalteaufnahme (7) angebracht ist.

14. Anordnung nach Anspruch 13, bei der jeder Belag (5, 105) eine Wärmetauschfläche umfasst, die der Außenseite des Belags (5, 105) zugewandt ist und mit der jeweiligen Belagshalteaufnahme (7) in Kontakt ist, wobei die Wärmeleiteinrichtungen (11, 111) Wärme von der Bremsfläche (9, 109) zu der Wärmetauschfläche (10, 110) und von dort zu der Belagshalteaufnahme (7) leiten.

15. Anordnung nach Anspruch 14, bei der jede Belagshalteaufnahme (7) mit einer Lamelle (20) versehen ist, um die Wärmeableitung zu unterstützen.

16. Gemisch für die Herstellung eines Bremsbelags (5, 105) für eine Bremse (4) eines Fahrrades (1), enthaltend Gummi, Vernetzungsmittel und Graphitkörner (11), die eine größere Leitfähigkeit als Gummi haben, **dadurch gekennzeichnet, dass** die Körner (11) eine durchschnittliche Größe zwischen 10 µm und 100 µm haben.

17. Gemisch nach Anspruch 16, bei dem die Graphitkörner (11) aus expandiertem Naturgraphit bestehen.

18. Gemisch nach Anspruch 17, umfassend 30-60 Gew.-% Gummi und 4-50 Gew.-% Körner (11).

19. Gemisch nach Anspruch 18, umfassend 30-40 Gew.-% Gummi, 40-60 Gew.-% Kork und 4-20 Gew.-% Körner (11).

20. Gemisch nach Anspruch 19, bei dem die Summe der Gewichtsprozentsätze von Kork und Körnern (11) kleiner oder gleich 65% ist.

21. Gemisch nach Anspruch 19, bei dem der Kork in Körnern einer durchschnittlichen Größe von 0,3 bis 1 mm, vorzugsweise 0,5 bis 0,7 mm vorliegt.

22. Gemisch nach Anspruch 19, bei dem die Körner (11) in einer Menge von 4-15 Gew.-% vorliegen.

## Revendications

1. Plaquette de frein (5, 105) pour un frein (4) d'une bicyclette (1), comprenant une surface de freinage (9, 109) destinée à être comprimée lors du freinage contre un côté (8) d'une jante (3) d'une roue (2) de la bicyclette (1), une matrice de caoutchouc à haute friction (13), un moyen de transmission thermique (11, 111) approprié pour le transfert de chaleur hors de la surface de freinage (9, 109), ledit moyen de transmission thermique comprenant des granules (11) conçus à partir de graphite présentant une plus grande conductivité thermique que la matrice de caoutchouc (13), incorporés dans la matrice (13), **caractérisée en ce que** les granules (11) présentent une dimension moyenne entre 10 µm et 100 µm.

2. Plaquette selon la revendication 1, comprenant une surface d'échange de chaleur (10, 110) en direction de l'extérieur de la plaquette (5, 105), distincte de la surface de freinage (9, 109), où le moyen de transmission thermique (11, 111) transmet de la chaleur de la surface de freinage (9, 109) à la surface d'échange de chaleur (10, 110).

3. Plaquette selon la revendication 2, où la surface d'échange de chaleur (10, 110) est appropriée pour entrer en contact avec un support portant la plaquette (7) ou avec de l'air.

4. Plaquette selon la revendication 1, où lesdits granules (11) sont répartis à travers la matrice (13), y compris la surface de freinage (9).

5. Plaquette selon la revendication 1, où les granules de graphite (11) sont conçus à partir de graphite naturel expansé.

6. Plaquette selon la revendication 1, conçue à partir d'un mélange comprenant, en poids, 30 à 60 % de caoutchouc et 4 à 50 % de granules (11).

7. Plaquette selon la revendication 6, où le mélange comprend, en poids, 30 à 40 % de caoutchouc, 40 à 60 % de liège et 4 à 20 % de granules (11).

8. Plaquette selon la revendication 7, où la somme du pourcentage en poids du liège et des granules (11) est inférieure ou égale à 65 %.

9. Plaquette selon la revendication 7, où le liège se situe dans des granules d'une dimension moyenne de 0,3 à 1 mm, de préférence de 0,5 à 0,7 mm.

10. Plaquette selon la revendication 7, où lesdits granules (11) sont conçus à partir de graphite naturel expansé, dans une proportion égale à 4-15 % en poids.

11. Assemblage de frein pour roue (6) pour une bicyclette (1), comprenant :
- une roue (2), comprenant une jante (3) présentant deux côtés opposés (8) ; et
- un frein (4), comprenant deux plaquettes de frein (5, 105) selon l'une quelconque des revendications précédentes, destiné à être actionné durant le freinage dans le sens de compression des surfaces de freinage respectives (9, 109) des plaquettes (5, 105) contre les côtés (8) de la jante (3).

12. Assemblage selon la revendication 11, où la jante (3) est conçue à partir de matériau composite.

13. Assemblage selon la revendication 11, où chaque plaquette (5, 105) est installée sur le frein respectif (4) par le biais d'un support portant la plaquette (7).

14. Assemblage selon la revendication 13, où chaque plaquette (5, 105) comprend une surface d'échange de chaleur en direction de l'extérieur de la plaquette (5, 105), en contact avec le support portant la plaquette (7) respectif, où le moyen de transmission thermique (11, 111) transmet de la chaleur de la surface de freinage (9, 109) à la surface d'échange de chaleur (10, 110) puis au support portant la plaquette (7).

15. Assemblage selon la revendication 14, où chaque support portant la plaquette (7) est doté d'ailettes (20) pour favoriser la dispersion de la chaleur.

16. Mélange pour la préparation d'une plaquette de frein (5, 105) pour un frein (4) d'une bicyclette (1), comprenant du caoutchouc, des agents de réticulation et des granules de graphite (11) présentant une conductivité thermique supérieure à celle du caoutchouc, **caractérisé en ce que** les granules (11) présentent une dimension moyenne entre 10 µm et 100 µm.

17. Mélange selon la revendication 16, où les granules de graphite (11) sont conçus à partir de graphite naturel expansé.

18. Mélange selon la revendication 17, comprenant, en poids, 30 à 60 % de caoutchouc et 4 à 50 % de granules (11).

19. Mélange selon la revendication 18, comprenant, en poids, 30 à 40 % de caoutchouc, 40 à 60 % de liège et 4 à 20 % de granules (11).

20. Mélange selon la revendication 19, où la somme du pourcentage en poids du liège et des granules (11) est inférieure ou égale à 65 %.

21. Mélange selon la revendication 19, où le liège se situe dans des granules d'une dimension moyenne de 0,3 à 1 mm, de préférence de 0,5 à 0,7 mm.

22. Mélange selon la revendication 19, où lesdites granules (11) sont dans une proportion égale à 4-15 % en poids.
